# EUROPÄISCHE PATENTSCHRIFT

(11) **EP 1 110 755 B1**
(45) Veröffentlichungstag und Bekanntmachung des Hinweises auf die Patenterteilung: **02.05.2002**
(21) Anmeldenummer: 99125072.1
(22) Anmeldetag: 16.12.1999
(51) Int. Cl.: B60B 7/12

(54) **Radkappe zum Aufklemmen auf eine Radfelge**
Wheel cap to clamp on a wheel rim
Enjoliveur de roue à serrer sur une jante de roue

(43) Veröffentlichungstag der Anmeldung: 27.06.2001
(73) Patentinhaber: Baumann Federn AG, 8630 Rüti (CH)
(72) Erfinder: Geisel, Alwin, 8630 Rüti (CH)
(74) Vertreter: Troesch Scheidegger Werner AG

(56) Entgegenhaltungen:
- EP-A- 0 264 201
- EP-A- 0 629 517
- DE-A- 2 622 908
- DE-A- 3 527 288
- DE-A- 19 501 808
- GB-A- 2 052 405

## Beschreibung

Die Erfindung betrifft eine Radkappe zum Aufklemmen auf eine Radfelge, insbesondere von Personenkraftwagen nach dem Oberbegriff des Anspruchs 1.

Aus DE 44 08 480 A1 und DE 26 22 908 A1 sind Radkappen bekannt, die einen kreisrunden Federring aufweisen, der in fest mit der Radkappe verbundenen Stützen gehalten ist. Beim Aufklemmen der Radkappe werden die Stützen radial nach innen gegen die Federkraft des Federrings gebogen, bis an den Stützen vorgesehene Rastnasen in eine umlaufende Rille an der Radfelge einrasten. Die notwendige radiale Haltekraft wird somit durch den geschweissten Federring aus Federstahldraht erzeugt. Nachteilig bei solchen Radkappen ist, dass beim Aufklemmen der Radkappen relativ grosse Gegenkräfte überwunden werden müssen, die vom Federring ausgeübt werden. Diese grossen Gegenkräfte sind darauf zurückzuführen, dass ein relativ steifer Federring verwendet werden muss, um einen ausreichend guten und festen Halt der Radkappe an der Radfelge erreichen zu können.

Zur optimalen Befestigung der Radkappe an der Felge müssen die folgenden vier Funktionen erfüllt sein:
1. Wenn die Radkappe nicht in der Felge montiert ist, darf der Federring die Stützen nicht zu weit radial nach aussen drükken, damit eine gute Montierbarkeit der Radkappe in der Felge gewährleistet ist und die Stützen beim Montieren nicht abbrechen können.
2. Beim Abziehen der Radkappe von der Felge soll eine bestimmte Abzugskraft gegeben sein, welche sicherstellt, dass sich die Radkappe beim Gebrauch des Fahrzeugs nicht von der Felge löst. Zu berücksichtigen sind dabei beispielsweise Vibrationen, Fliehkräfte sowie äussere Einwirkungen. Allerdings sollte in der Regel die Radkappe trotzdem von Hand und ohne Werkzeug demontierbar sein.
3. Im montierten Zustand muss die Radialkraft noch ausreichend gross sein, um ein möglichst hohes Verdrehmoment der Radkappe in der Felge zu erzeugen. Dies ist notwendig, um ein Beschädigen des durch die Blende ragenden Ventils und eine Abnutzung der Rastnasen zu vermeiden. Insbesondere darf sich die Radkappe auch dann nicht verdrehen, wenn ruckartige Rad-Drehbewegungen beim Antiblockiersystem (ABS) und bei der Antischlupfregelung (ASR) auftreten.
4. Die Fertigungstoleranzen von Felge, Radkappe und Federring dürfen die Funktionalität der Radkappe nicht beeinträchtigen.

Um die beim Aufklemmen zu überwindende Gegenkraft zu verringern, sind in der DE 29 37 083 B1, DE 29 43 137 C2, DE 30 39 219 A1 sowie der DE 33 15 342 C1 Federringe beschrieben, deren Radialweg nach aussen durch Anschläge begrenzt ist und welche gegen diese Anschläge eine radiale Vorspannung aufweisen.

Somit kann das Aufklemmen der Radkappe infolge der Vorspannung mit relativ geringem Kraftaufwand auf die Felge erfolgen, wobei die Radkappe dennoch infolge der Vorspannung mit relativ grosser Kraft in der Felge gehalten wird. Die Vorspannung des Federrings muss allerdings in unmontiertem Zustand von der Radkappe aufgenommen werden. Um Deformationen der nicht montierten Radkappe zu vermeiden, muss diese stark versteift werden. Hi,erdurch erhöhen sich die Werkzeug- und Teilekosten sowie das Eigengewicht der Radkappe.

Weitere Lösungsvarianten sind in der US 4 740 038 sowie der JP 3-169 702 A beschrieben. Hier wird vorgeschlagen, den Federring tangential vorzuspannen, indem die Biegespannung einer radial nach innen gerichteten, U-förmigen Abbiegung durch einen gegen die Vergrösserung des Ringdurchmessers wirkenden, separaten, tangentialen Spannbügel gehalten wird. Diese Lösung hat dieselben Eigenschaften wie der radial vorgespannte Ring und hat gegenüber letzterem den Vorteil, dass im freien Zustand auf die Kappe keine Radialkräfte ausgeübt werden. Wegen der Kosten für den zusätzlichen Spannbügel und dessen Montagekosten auf dem Ring wird diese Variante jedoch sehr teuer. Ausserdem ist die Radialkraftwirkung des Federringes wegen der tangentialen Reibung in den Stützen nicht zentralsymmetrisch, sondern einseitig, was den Rundlauf der Kappe zur Felge nachteilig beeinflusst.

Es ist daher eine Aufgabe der Erfindung, eine Radkappe zu schaffen, die bei hohem Verdrehmoment mit geringem Kraftaufwand montierbar und demontierbar ist und auf die keine radialen Vorspannkräfte in nicht montiertem Zustand wirken.

Als Lösung zu dieser Aufgabe wird in der DE 195 01 808 eine Radkappe mit einem Federring vorgeschlagen, welche einen inneren Drahtring aufweist, der entlang seines kreisrunden Umfanges nach aussen gebogene Bügelteile aufweist, welche Bügelteile an Stützen drehbar gelagert sind, so dass bei von aussen radial wirkender Kraft zusätzlich zur radialen Einwärtsbewegung eine Axialbewegung des Drahtringes erfolgt.

Der in der DE 195 01 808 vorgeschlagene Drahtring ist aber relativ teuer und aufwendig in der Herstellung, so dass es eine weitere Aufgabe der vorliegenden Erfindung ist, eine Radkappe mit Federring im Sinne einer Weiterentwicklung der DE 195 01 808 vorzuschlagen, welche einfacher und kostengünstiger ist in der Herstellung.

Die Lösung der Aufgaben erfolgt erfindungsgemäss durch die Merkmale von Anspruch 1.

Die erfindungsgemässe Radkappe zum Aufklemmen auf eine Radfelge weist wiederum einen Federring aus Draht hergestellt auf, welcher im Gegensatz zu demjenigen, vorgeschlagen in der DE 195 01 808, weitgehendst als wenigstens nahezu regelmässiges Vieleck ausgebildet ist. Die Ecken bzw. Eckbereiche des vieleckigen Federringes sind an radial federnden Stützen der Radkappe gehalten, um in einer ringförmigen Vertiefung an der Radfelge die Radkappe einrastbar zu halten. Die Ecken bzw. Eckbereiche an den Stützen sind entweder um die Drahtachse drehbar gelagert und/oder der Federring ist wenigstens an einem Teil der Ecken bzw. Eckbereiche unterbrochen ausgebildet, derart, dass bei von aussen radial auf die Ecken bzw. Eckbereiche wirkender Kraft zusätzlich zu der resultierenden radialen Einwärtsbewegung des Federringes eine weitere axiale Bewegung des Federringes bzw. der einzelnen zwischen den Ecken liegenden Segmenten des Rings erfolgt.

Die erfindungsgemäss vorgeschlagene Radkappe weist wiederum einen Federring auf, welcher ebenfalls entsprechend demjenigen der DE 195 01 808 als sogenannter "Zweiphasenring" bezeichnet werden kann und somit sämtliche Vorteile aufweist wie derjenige in der DE 195 01 808.

Gemäss einer Ausführungsvariante sind die Ecken bzw. Eckbereiche des Federringes an den Stützen drehbar gelagert, so dass der Federring beim Aufklemmen auf eine Radfelge nicht nur in einer Ebene gebogen wird, sondern zusätzlich auch eine Axialbewegung ausführen kann. Somit können bei radialen Einfederungen die vorzugsweise wenigstens nahezu geraden Verbindungsteile elastisch schräg bis senkrecht aus der Ringebene herausgebogen werden, wobei der Draht selbst dazu überlagert eine Torsionsbewegung um seine Achse ausführt. Durch diese zusätzliche Biegungsbewegung bzw. Torsionsbewegung wird ein ausreichend hohes Verdrehmoment erreicht, so dass sich die Radkappe auch bei ruckartigen Rad-Drehbewegungen nicht verdrehen kann.

Gemäss einer weiteren Ausführungsvariante ist der Federring mindestens an einer, vorzugsweise an mehreren oder allen Ecken bzw. Eckbereichen unterbrochen, derart, dass der Federring im wesentlichen durch die einzelnen zwischen den Ecken bzw. Eckbereichen liegenden Drahtsegmente gebildet wird, welche je mit ihren Enden an den Stützen gehalten werden, bzw. in Aufnahmen an den Stützen eingelassen sind.

Gegenüber bekannten Radkappen mit radial vorgespannten Federringen ist die erfindungsgemässe Radkappe wesentlich einfacher aufgebaut, da von der Radkappe im nicht montierten Zustand keine Vorspannkräfte aufgenommen werden müssen. Die erfindungsgemässe Radkappe weist somit keine zusätzlichen Versteifungsrippen auf und ist daher leichter.

Gegenüber den bekannten Radkappen mit tangentialer Vorspannung des Federringes werden durch Wegfall des zusätzlichen Spannbügels Kosten eingespart. Ausserdem wirkt diese neue Ringanordnung bezüglich Radialkraft zentralsymmetrisch und nicht einseitig, womit ein besserer Rundlauf der Kappe zur Felge erreicht wird.

Zudem ergibt ein Vergleich des in der vorliegenden Erfindung verwendeten Federringes mit demjenigen der DE 195 01 808 eine wesentlich einfachere Konstruktion, und zudem liegt ein weiterer wesentlicher Vorteil darin, dass gegenüber einem normalen, kreisförmigen Ring dieselbe Radialkraft mit einer wesentlich kleineren Drahtstärke erreicht werden kann, womit die Materialkosten und das Gewicht reduziert werden können.

In der DE 26 22 908 ist ebenfalls ein Federring mit geraden Verbindungsteilen beschrieben. Dieser besitzt radiale Abbiegungen nach aussen, die nicht auf die Stütze wirken, sondern direkt in die Felgenrille eingreifen. Ausserdem sind die radialen Abbiegungen in der Stütze so geführt, dass sie keine Torsionsbewegung ausführen können und damit eine axiale Einfederung unterdrückt wird.

Im übrigen kann der Federring oder auch die aus den einzelnen Segmenten bestehende, ringförmige Anordnung nicht nur in Verbindung mit Radkappen eingesetzt werden, sondern ist auch überall dort anwendbar, wo eine radiale Gleichkraft-Kennlinie gefordert wird, wie z.B. als Stützfeder für Radial-Dichtringe, elektrische Radialkontakte, radiale Verschleisskompensation etc.

Die Erfindung wird nun anschliessend beispielsweise und unter Bezug auf die beigefügten Figuren näher erläutert. Dabei zeigen:
- Fig. 1a:: eine erfindungsgemässe Radkappe mit Federring in Seitenansicht;
- Fig. 1b:: die Radkappe aus Fig. 1a in Draufsicht, mit eingebauten Federring;
- Fig. 2a bis 2e:: schematisch dargestellt, verschieden ausgebildete Eckbereiche des Federringes, entsprechend gelagert in Stützen;
- Fig. 3a bis 3c:: schematisch dargestellt, mögliche Auslenkungsrichtungen des Federringes;
- Fig. 4:: ein Diagramm, das die Abhängigkeit der Federkraft vom Federweg sowohl für einen Federring gemäß Anspruch 1 wie auch für Federringe nach dem Stand der Technik zeigt;
- Fig. 5a:: einen Schnitt durch den Ventilbereich der Felge;
- Fig. 5b und 5c:: Eckbereiche mit dem Ventil, in Draufsicht;
- Fig. 5d: in Draufsicht, eine Radkappe, aufweisend das zwischen zwei Eckbereichen angeordnete Ventil;
- Fig. 6a und 6b:: einen Eckbereich bzw. eine Verbindungsstelle in Draufsicht für einen offenen bzw. nicht geschlossenen Federring;
- Fig. 7a und 7b: eine weitere Ausführungsvariante einer erfindungsgemässen Radkappe in Draufsicht mit dem aus mehreren Segmenten bzw. Knickstäben bestehenden Federring, und
- Fig. 7c bis 7e: Eckbereiche der Elemente aus den Fig. 7a und 7b.

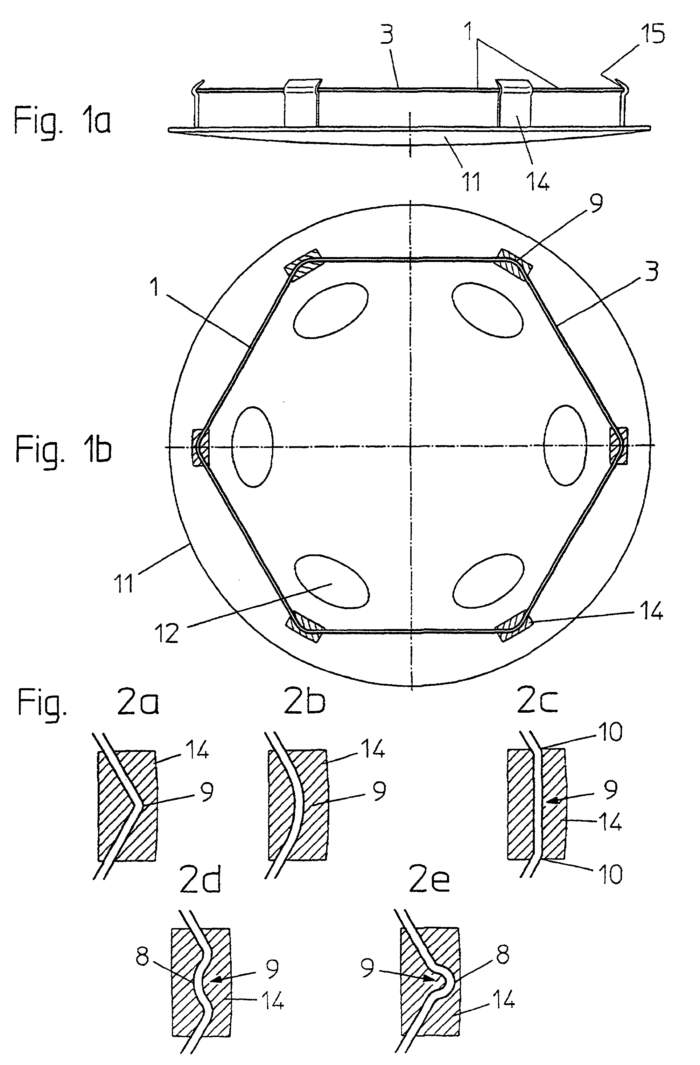

In den Fig. 1a und 1b ist eine erfindungsgemäss ausgebildete Radkappe dargestellt, sowohl in Seitenansicht wie auch in Draufsicht, wobei letztere Ansicht derart gewählt ist, dass der innenliegende Federring 1 gut sichtbar ist. Der Federring besteht aus einem regelmässigen Vieleck, wie beispielsweise aus Fig. 1b erkennbar aus einem gleichseitigen Seckseck. Vorzugsweise liegt die Anzahl der Ecken zwischen drei und zehn Ecken. Die Verbindungsstücke zwischen den Ecken sind dabei weitgehendst geradlinig ausgebildet. Jede der Ecken 9 ist im Kopf bzw. einer Einkerbung 15 einer Radkappenstütze 14 um die Drahtachse drehbar angeordnet und erzeugt dort die für das Einrasten der Radkappe 11 in eine Felgenrille erforderliche Radialkraft. In Fig. 1b weiter erkennbar sind Lüftungslöcher 12 in der Radkappe 11.

Der Eckenbereich 9 des Federringes 1 kann dabei scharfkantig sein, wie in Fig. 2a dargestellt, abgerundet analog der Darstellung in Fig. 2b oder mit einem geraden Steg und zwei Seitenecken 10, wie in Fig. 2c erkennbar. Auch kann der Eckbereich 9 eine nach innen oder nach aussen gerichtete Wellung 8 aufweisen, wie in den Fig. 2d und 2e dargestellt. Generell gilt, dass der Eckbereich 9 im Prinzip x-beliebig ausgebildet werden kann, wesentlich ist, dass der Federring im Eckbereich in der Radkappenstütze um die Drahtachse drehbar gelagert ist und sich in der Stütze tangential nicht verschieben kann.

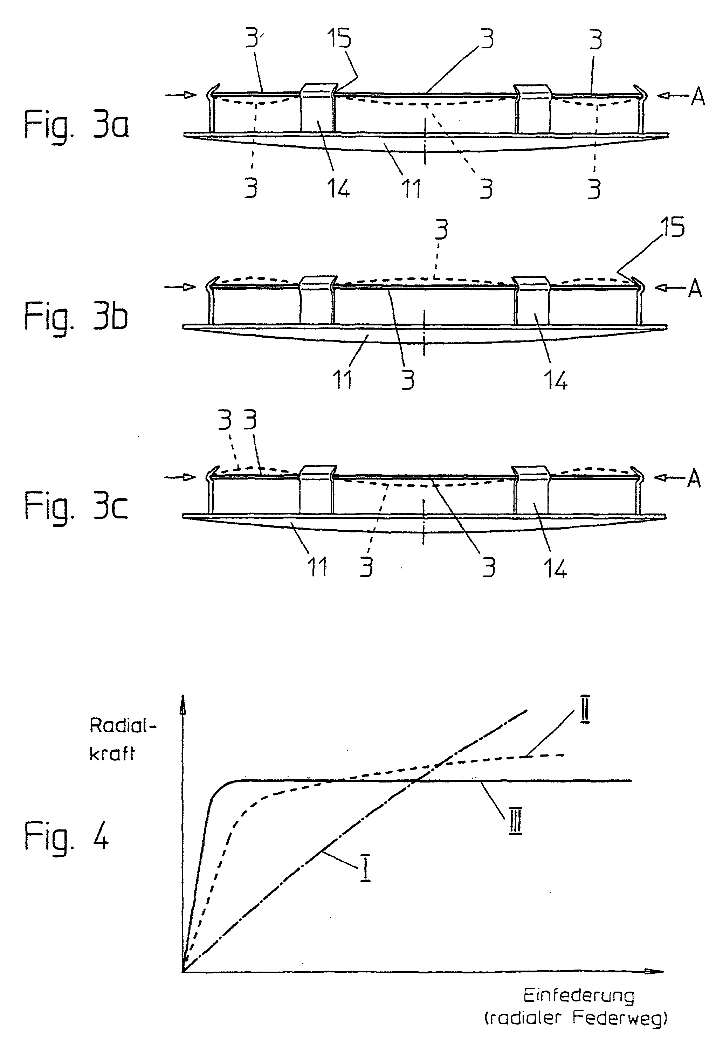

Durch diese drehbare Lagerung ergibt sich nun bei radialer Einfederung, dass sich die im wesentlichen geraden Verbindungsteile 3 elastisch schräg bis senkrecht aus der Ringebene A herausbiegen können, wobei der Federring bzw. der Draht selbst dazu überlagert eine Torsionsbewegung um seine Achse ausführt. Der Schräglagewinkel ist dabei abhängig von der Geometrie, wie Ringdurchmesser sowie der Anzahl Stützen im Umfang und liegt im Bereich von ca. 45° - 85° zur Ringebene. Diese elastische Auslenkung kann in beide Richtungen zur Ringebene A erfolgen, wie schematisch und in Seitenansicht in den Fig. 3a, 3b und 3c dargestellt. Insbesondere ist auch eine wechselseitige Auslenkung möglich, wie insbesondere in Fig. 3c erkennbar. Die Auslenkungsrichtung kann durch eine leichte Vorbiegung in die gewünschte Richtung oder durch eine von aussen aufgebrachte Krafteinleitung im mittleren Bereich des geraden Verbindungsteils 3 festgelegt werden; dabei ist nur eine sehr kleine Auslenkungskraft erforderlich. Auch mit einer von aussen eingebrachten axialen Vorspannung des Ringes kann die Auslenkungsrichtung vorbestimmt werden.

Die im Diagramm von Fig. 4 dargestellte Kennlinie III der Radialkraft, abhängig von der radialen Einfederung, zeigt zuerst einen steilen Anstieg bis auf das weitgehend horizontale Kraftniveau, d.h. bei weiterer Einfederung tritt praktisch kein weiterer Kraftanstieg auf (= sogenanntes Gleichkraftverhalten). Man erreicht somit eine noch ausgeprägtere Gleichkraftkennlinie im Vergleich zur Ausführung in der DE 195 01 808, welche in Fig. 4 mit II bezeichnet ist. Damit ist die zur Radialkraft proportionale Kraft, die für das Abziehen der Kappe von der Felge aufgebracht werden muss (sogenannte Abzugskraft), weitgehend unabhängig von der Felgendurchmessertoleranz sowie von den Toleranzen der Radkappe und des Ringes selbst. Damit ist es auch möglich, für Stahl- und Aluminiumbandfelgen, welche wegen der unterschiedlichen Blechstärken relativ stark differierende Rillendurchmesser aufweisen, dieselbe Radkappe zu verwenden, mit nur kleinen Unterschieden in der Abzugskraft.

Ein weiterer Vorteil liegt darin, dass die in der Rille ausgeübte Radialkraft vergleichsweise sehr hoch ist, wodurch auch ein hohes Verdrehmoment der Kappe in der Felge sichergestellt ist. Dies ist wichtig, damit bei einem auf die Kappe aufgebrachten Verdrehmoment (z.B. durch Berührung mit dem Bordstein) das durch die Kappe ragende Ventil nicht gefährdet ist. Diese hohe Radialkraft verhindert auch weitgehend die Drehbewegung der Kappe in der Felge, welche durch die Ratterbewegungen des Antiblockiersystems (ABS) oder der Antischlupfregelung (ASR) verursacht wird. Diese Drehbewegung der Kappe in der Felge führt zur Abnutzung an den Rastnasen der Kappenstützen, wodurch die Radkappe von der Felge springen und damit gefährliche Situationen hervorrufen kann. Insbesondere ein Vergleich der erfindungsgemässen Kennlinie III mit der Kennlinie I, welche für einen normalen, kreisförmigen Federring gilt, zeigt den wesentlichen Unterschied, welcher zu den oben angeführten wichtigen Eigenschaftsunterschieden bzw. Vorteilen führt.

Ein wesentlicher Vorteil des Federringes liegt auch darin, dass gegenüber einem normalen, kreisförmigen Ring dieselbe Radialkraft mit einer wesentlich kleineren Drahtstärke erreicht werden kann, womit die Materialkosten und das Gewicht reduziert werden können.

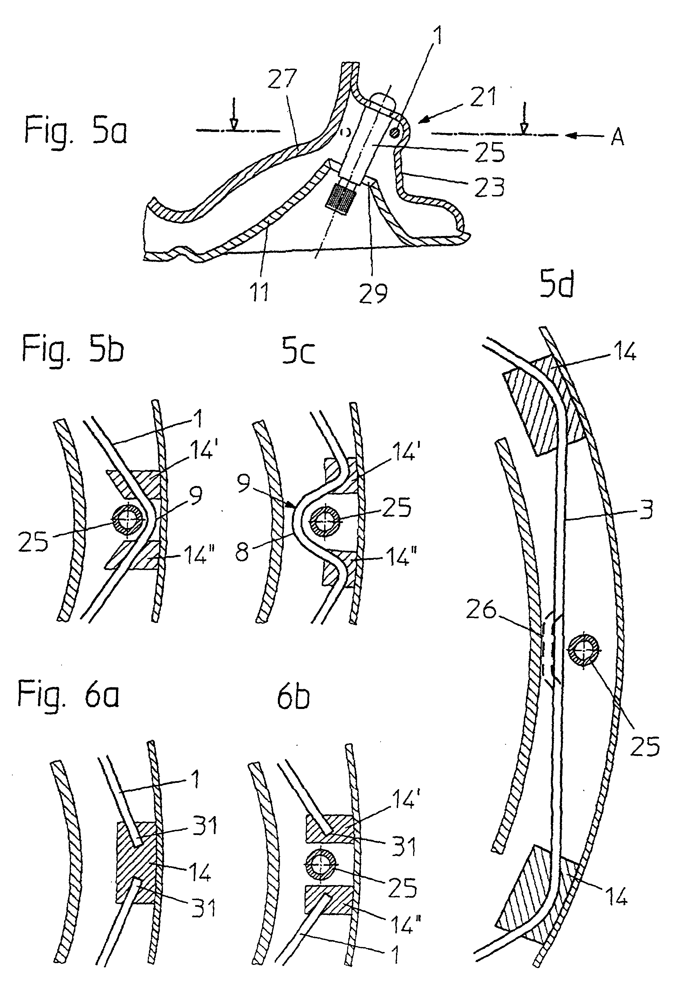

Ein wichtiger Bereich stellt der Ventilbereich dar, welcher in Fig. 5a schematisch, im Querschnitt dargestellt ist. Im Ventilbereich 21 erstreckt sich das Ventil 25 von der Felge 23 durch eine Öffnung 29 der Radkappe 11 hindurch. In Fig. 5a ebenfalls erkennbar ist die Felgenschüssel 27, welche durch die Radkappe 11 überdeckt wird. Die Federringebene ist mit A bezeichnet.

Es ist nun möglich, einen der Eckbereiche 9 zur radial äusseren oder inneren Umgehung des Ventils 25 in der Ringebene zu verwenden. Dabei zeigen sowohl die Darstellung in Fig. 5a wie auch die Darstellung in Draufsicht gemäss Fig. 5b eine äussere Umgehung des Ventils 25 durch den Federring 1, wobei sich eine geteilte Stütze 14' und 14'' beidseitig des Ventils 25 befindet, wie in den Fig. 5b und 5c erkennbar. Fig. 5c weist im übrigen eine innere Umgehung des Ventiles 25 auf, indem analog Fig. 2d der Federring im Eckbereich 9 eine nach innen gerichtete Einbiegung 8 aufweist.

Es ist aber auch möglich, das Ventil 25 radial innen zu umgehen, indem der Federring so plaziert wird, dass das Ventil 25 etwa in der Mitte des geraden Verbindungsteils 3 liegt. Eine derartige Lösung ist in Fig. 5d dargestellt. Sofern der Ring das Ventil 25 berühren sollte, kann in diesem Bereich noch eine kleine Zusatzabbiegung 26 angebracht werden.

Die Verbindungsstelle der Drahtenden (z.B. mittels Widerstandsstumpfschweissung, mittels Verbindungshülse etc.) wird vorteilhafterweise in einem Eckbereich 9 vorgesehen, weil der Ring dort am wenigsten beansprucht ist und damit die Deformationsgefahr am kleinsten ist.

Es ist aber auch möglich, offene Ringenden durch Einstecken in Sacklöcher einer Stütze zu verbinden. Entsprechende Lösungen sind in den Fig. 6a und 6b dargestellt, wobei in Fig. 6a die beiden Federring-Drahtenden 31 in entsprechenden Sacklöchern der Stütze 14 eingesteckt sind. Diese Lösung kann auch zur Ventilumgehung verwendet werden, falls beispielsweise für die oben beschriebenen Lösungen mit Umgehung radial aussen oder radial innen (Fig. 5b bis 5d) zu wenig Platz zwischen Felge und Schüssel vorhanden ist. In diesem Falle können, wie in Fig. 6b dargestellt, die Drahtenden 31 in die Sacklöcher einer geteilten Stütze 14' bzw. 14'' beidseits des Ventils 25 gesteckt werden. Die Sacklöcher müssen dabei so gestaltet sein, dass sie die Drehbewegung und die axiale Biegebewegung des Federringes nicht behindern. Die Stützenteile beidseits des Ventils müssen miteinander verbunden sein, damit sie die durch die Ringenden erzeugte Tangentialkraft aufnehmen können.

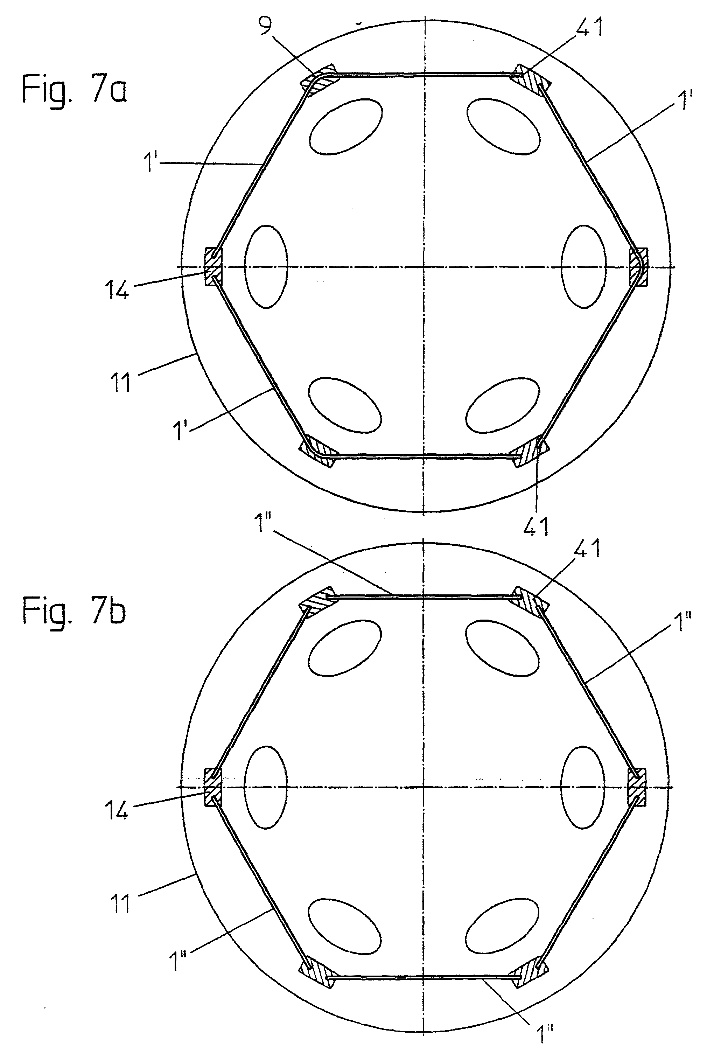

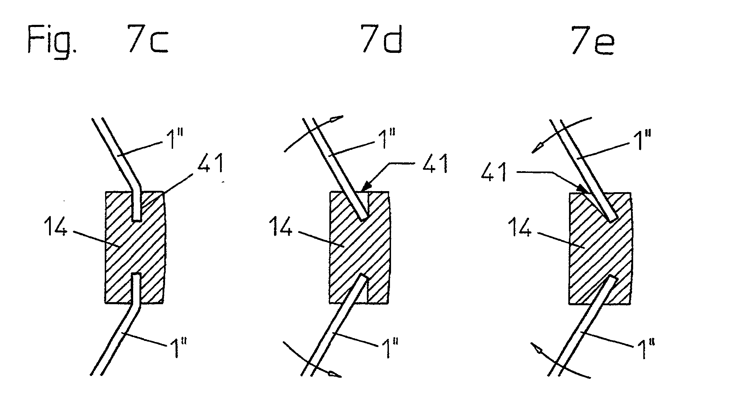

Der Vieleck-Federring kann auch in einzelne Segmente aufgeteilt werden, wobei die beschriebene Funktion grundsätzlich gleich bleibt: In Fig. 7a sind beispielsweise drei Segmente 1' mit je einer Abbiegung 9 dargestellt, deren Enden in Sacklöcher (41) der Stützen 14 gesteckt sind. Ebenso könnte die Unterteilung auch in zwei Segmente 1' je mit zwei Abbiegungen 9 erfolgen (nicht dargestellt). Dabei kann jede beliebige Kombination bezüglich Anordnung des Ventils 25 nach Fig. 5b bis 5d sowie 6b vorkommen. Alle diese Varianten mit mindestens einer Abbiegung 9 zeigen dasselbe Verhalten bei radialer Einfederung wie der geschlossene oder offene Vieleckring.

Es ist auch möglich, ohne Änderung der grundsätzlichen Funktion den Vieleck-Federring noch weiter aufzuteilen, wie in Fig. 7b dargestellt. Zwischen den Stützen sind nur noch weitgehend gerade Knickstäbe angeordnet. Bei dieser Variante ist allerdings die Ausbiegungsrichtung bei radialer Einfederung nicht mehr definiert. Wenn nur eine bestimmte Ausbiegungsrichtung zulässig ist, muss jeder Knickstab an seinen Enden eine Schenkel-Abbiebung in zum Kappenzentrum tangentialer Richtung aufweisen (Fig. 7a); die Ausbiegungsrichtung entspricht dann derjenigen wie beim geschlossenen oder offenen Vieleckring, d.h. axial schräg bis senkrecht zur Ringebene mit überlagerter Biege- und Torsionsbewegung. Wenn eine andere Ausbiegungsrichtung erforderlich ist, muss diese durch die Sacklochform (41) vorgegeben werden, z.B. nach Fig. 7d Ausbiegungsrichtung radial nach aussen, oder nach Fig. 7e Ausbiegungsrichtung radial nach innen. In entsprechender Weise kann auch jede andere Ausbiegungsrichtung festgelegt werden. Auch diese Knickstab-Varianten zeigen das beschriebene Gleichkraftverhalten, jedoch mit wählbarer Ausbiegungsrichtung.

Die in den Fig. 1 bis 7 dargestellten Ausführungsformen einer erfindungsgemässen Radkappe bzw. Radblende inklusive Federring stellen selbstverständlich nur Beispiele dar, die dazu dienen sollen, die vorliegende Erfindung näher zu erläutern. Insbesondere wird in den Beispielen auch nicht auf die Materialwahl eingegangen, da grundsätzlich alle aus dem Stand der Technik bekannten Materialien sowohl für die Herstellung der Kappe bzw. Blende selbst wie auch für die Herstellung des Federringes in der vorliegenden Erfindung verwendet werden können. Das heisst, alle bekannten und geeigneten Metalle wie auch Polymere bzw. Kunststoffe können für die Herstellung der Radkappe verwendet werden, wie auch sämtliche geeigneten Federwerkstoffe bzw. gegebenenfalls verstärkte Kunststoffe, wie beispielsweise kohlenstoffverstärkte Composite-Kunststoffe können für die Herstellung des Federringes verwendet werden. Auch konstruktiv können die in den Fig. 1 bis 7 dargestellten Beispiele x-beliebig abgeändert, variiert oder durch weitere Merkmale ergänzt werden. Wesentlich ist insbesondere die Tatsache, dass der vorgeschlagene Federring vieleckig ausgebildet ist, vorzugsweise regelmässig vieleckig mit vorzugsweise weitgehendst geraden Verbindungsstücken.

## Patentansprüche

1. Radkappe bzw. Radblende zum Aufklemmen auf eine Radfelge (23) mit einem Federring (1) aus Draht hergestellt, welcher weitgehendst als wenigstens nahezu regelmässiges Vieleck ausgebildet ist, wobei wenigstens ein Teil der Ecken (9) bzw. Eckbereiche des vieleckigen Federringes (1) an radial federnden Stützen (14, 14', 14'') der Radkappe (11) gehalten sind, um in einer beispielsweise ringförmigen Vertiefung an der Radfelge die Radkappe bzw. Blende (11) einrastbar zu halten, und dass die Ecken bzw. Eckbereiche (9) an den Stützen (14, 14', 14") um die Drahtachse drehbar gelagert sind, und/oder der Federring wenigstens an einem Teil der Ecken bzw. Eckbereiche unterbrochen ist, so dass bei von aussen radial auf die Ecken bzw. Eckbereiche wirkender Kraft zusätzlich zu der resultierenden radialen Einwärtsbewegung des Federringes (1) eine weitere Axialbewegung des Federringes bzw. der einzelnen zwischen den Ecken bzw. Eckbereichen liegenden Segmente des Federringes erfolgen kann.

2. Radkappe bzw. Radblende, nach Anspruch 1, **dadurch gekennzeichnet, dass** die Verbindungsstücke (3, 1', 1") zwischen den Ecken bzw. Eckbereichen (9) des Federringes (1) weitgehendst gerade ausgebildet sind.

3. Radkappe bzw. Radblende, nach einem der Ansprüche 1 oder 2, **dadurch gekennzeichnet, dass** der Federring zwischen drei und zehn Ecken aufweist.

4. Radkappe bzw. Radblende, nach einem der Ansprüche 1 bis 3, **dadurch gekennzeichnet, dass** die Ecken bzw. Eckbereiche (9) scharfkantig, abgerundet, einen geraden Steg aufweisend oder eine nach innen oder aussen ragende Aufbiegung (8) aufweisend ausgebildet sind.

5. Radkappe bzw. Radblende, nach einem der Ansprüche 1 bis 4, **dadurch gekennzeichnet, dass** der Federring derart vorgebogen ausgebildet ist, dass die Axialbewegung bei radial von aussen auf die Ecken bzw. Eckbereiche (9) wirkender Kraft in eine gewünschte Richtung erfolgt.

6. Radkappe bzw. Radblende, nach einem der Ansprüche 1 bis 5, **dadurch gekennzeichnet, dass** die Ecken bzw. Eckbereiche (9) des Federringes (1) oder der Segmente (1', 1") um die Drahtachse drehbar in entsprechenden Aussparungen bzw. Kerbungen (15) im Kopf der Radkappenstützen (14) angeordnet sind.

7. Radkappe bzw. Radblende, nach einem der Ansprüche 1 bis 6, **dadurch gekennzeichnet, dass** der Federring wenigstens an einer Ecke bzw. an einem Eckbereich offen ausgebildet ist, mit den beiden Ring- bzw. Drahtenden (31) in entsprechenden Sacklöchern (41) bzw. Aufnehmungen mindestens einer Radkappenstütze (14, 14', 14'') um die Drahtachse drehbar gelagert.

8. Radkappe bzw. Radblende, nach einem der Ansprüche 1 bis 7, **dadurch gekennzeichnet, dass** ein Eckbereich (9) des Federringes dazu vorgesehen ist, um das Ventil (25) innen oder aussen zu umgehen, wobei in diesem Eckbereich vorzugsweise die Radkappenstütze (14', 14'') mindestens zweiteilig ausgebildet ist zur Bildung eines Durchganges für das Ventil (25).

9. Radkappe bzw. Radblende, nach einem der Ansprüche 1 bis 8, **dadurch gekennzeichnet, dass** ein gerades Verbindungsteil (3) des Federringes dazu vorgesehen ist, um das Ventil (15) innen zu umgehen, wobei zur Vermeidung der Ventilberührung eine kleine radiale Zusatzabbiegung (26) vorgesehen werden kann.

10. Radkappe bzw. Radblende, nach einem der Ansprüche 1 bis 9, **dadurch gekennzeichnet, dass** der Ring aus einzelnen Segmenten (1') mit je mindestens einer Ecke (9) besteht, deren Enden in entsprechenden Sacklöchern (41) bzw. Aufnehmungen von zwei Radkappenstützen vorzugsweise drehbar gelagert sind.

11. Radkappe bzw. Radblende, nach einem der Ansprüche 1 bis 10, **dadurch gekennzeichnet, dass** der Ring aus einzelnen Knickstäben (1") besteht, deren Enden in entsprechenden Sacklöchern bzw. Aufnehmungen von zwei benachbarten Radkappenstützen beweglich gelagert sind.

## Claims

1. A wheel cap or wheel disk to be clamped on a wheel rim (23) comprising a wire spring ring (1) substantially in the form of an at least approximately regular polygon, wherein at least part of the corners (9) or corner regions of the polygonal spring ring (1) are attached to radially elastic supports (14, 14', 14") of the wheel cap (11) for snap fitting the wheel cap or disk (11) into a recess, for example a ring-shaped recess, in the wheel rim, and wherein the corners or corner regions (9) are mounted rotatable about the wire axis onto the supports (14, 14', 14"), and/or the spring ring is interrupted at least at part of the corners or corner regions, so that under a force acting radially from outside on the corners or corner regions in addition to the resulting radially inward movement of the spring ring (1) a further axial movement of the spring ring (1) or of the individual segments extending between the corner or corner regions thereof may take place.

2. The wheel cap or wheel disk according to claim 1, **characterized in that** the connecting members (3, 1', 1") between the corners or corner regions (9) of the spring ring (1) are made substantially straight.

3. The wheel cap or wheel disk according to claim 1 or 2, **characterized in that** the spring ring comprises between three to ten corners.

4. The wheel cap or wheel disk according to any of claims 1 to 3, **characterized in that** the corners or corner regions (9) are made sharp-edged, or rounded, or with a straight web or a bend (8) protruding inwardly or outwardly.

5. The wheel cap or wheel disk according to any of claims 1 to 4, **characterized in that** the spring ring is so pre-bent that the axial movement under a force acting radially from outside on the corners or corner regions (9) takes place in a desired direction.

6. The wheel cap or wheel disk according to any of claims 1 to 5, **characterized in that** the corners or corner regions (9) of the spring ring (1) or of the segments (1', 1") are disposed rotatable about the wire axis in corresponding grooves or notches (15) in the head of the wheel cap supports (14).

7. The wheel cap or wheel disk according to any of claims 1 to 6, **characterized in that** the spring ring is made open at least at one corner or corner region, the two ends (31) of the ring or wire being mounted rotatable about the wire axis in corresponding blind holes (41) or seats of at least one wheel cap support (14, 14', 14").

8. The wheel cap or wheel disk according to any of claims 1 to 7, **characterized in that** a corner region (9) of the spring ring is provided to by-pass the valve (25) internally or externally, the wheel cap supports (14', 14") in this corner region being preferably formed of at least two parts in order to provide a passage for the valve (25).

9. The wheel cap or wheel disk according to any of claims 1 to 8, **characterized in that** a straight connecting member (3) of the spring ring is provided to by-pass the valve (25) internally, wherein a small additional radial bend (26) may be provided to avoid contact with the valve.

10. The wheel cap or wheel disk according to any of claims 1 to 9, **characterized in that** the ring consists of individual segments (1'), each with at least one corner (9), having their ends preferably rotatably mounted in corresponding blind holes (41) or seats of two wheel cap supports.

11. The wheel cap or wheel disk according to any of claims 1 to 10, **characterized in that** the ring consists of individual bent rods (1") having their ends movably mounted in corresponding blind holes or seats of two adjacent wheel cap supports.

## Revendications

1. Enjoliveur à serrer sur une jante de roue (23), comportant un ressort annulaire (i) en fil métallique qui a sensiblement la forme d'un polygone au moins approximativement régulier, étant précisé qu'une partie au moins des angles (9) ou des zones angulaires du ressort annulaire polygonal (1) sont fixés à des supports faisant ressort radialement (14, 14', 14") de l'enjoliveur (11) afin de fixer celui-ci par encliquetage dans un creux annulaire, par exemple, de la jante, et que les angles ou zones angulaires (9) sont montés sur les supports (14, 14', 14") de manière à pouvoir pivoter autour de l'axe du fil métallique et/ou le ressort annulaire est interrompu sur une partie au moins des angles ou zones angulaires, de sorte qu'en présence d'une force agissant radialement, de l'extérieur, sur les angles ou zones angulaires, un mouvement axial supplémentaire du ressort annulaire ou des segments individuels du ressort situés entre les angles ou zones angulaires peut avoir lieu en plus du mouvement résultant, dirigé radialement vers l'intérieur, du ressort annulaire (1).

2. Enjoliveur selon la revendication 1, **caractérisé en ce que** les éléments de liaison (3, 1', 1") situés entre les angles ou zones angulaires (9) du ressort annulaire (1) sont sensiblement rectilignes.

3. Enjoliveur selon la revendication 1 ou 2, **caractérisé en ce que** le ressort annulaire présente entre trois et dix angles.

4. Enjoliveur selon l'une des revendications 1 à 3, **caractérisé en ce que** les angles ou zones angulaires (9) sont à arête vive, sont arrondis, présentent une bande droite ou présentent une partie courbe (8) saillant vers l'intérieur ou vers l'extérieur.

5. Enjoliveur selon l'une des revendications 1 à 4, **caractérisé en ce que** le ressort annulaire est pré-cambré de telle sorte que ledit mouvement axial, en présence d'une force agissant radialement, de l'extérieur, sur les coins ou zones angulaires (9), ait lieu dans une direction voulue.

6. Enjoliveur selon l'une des revendications 1 à 5, **caractérisé en ce que** les angles ou zones angulaires (9) du ressort annulaire (1) ou des segments (1', 1") sont disposés dans des creux ou encoches correspondants (15) de la tête des supports d'enjoliveur (14) de manière à pouvoir pivoter autour de l'axe du fil métallique.

7. Enjoliveur selon l'une des revendications 1 à 6, **caractérisé en ce que** le ressort annulaire a une forme ouverte au moins au niveau d'un coin ou d'une zone angulaire, les deux extrémités d'anneau ou de fil (31) étant montées dans des trous borgnes (41) ou des logements correspondants d'au moins un support d'enjoliveur (14, 14', 14") de manière à pouvoir pivoter autour de l'axe du fil métallique.

8. Enjoliveur selon l'une des revendications 1 à 7, **caractérisé en ce qu'**une zone angulaire (9) du ressort annulaire est prévue pour contourner la valve (25) par l'intérieur ou par l'extérieur, étant précisé que dans cette zone angulaire, le support d'enjoliveur (14', 14") est de préférence en deux parties, au moins, pour former un passage pour ladite valve (25).

9. Enjoliveur selon l'une des revendications 1 à 8, **caractérisé en ce qu'**un élément de liaison droit (3) du ressort annulaire est prévu pour contourner la valve (25) par l'intérieur, étant précisé que pour éviter le contact avec la valve, on peut prévoir une partie supplémentaire légèrement coudée radialement (26).

10. Enjoliveur selon l'une des revendications 1 à 9, **caractérisé en ce que** le ressort se compose de segments individuels (1') qui présentent chacun au moins un angle (9) et dont les extrémités sont montées dans des trous borgnes (41) ou des logements correspondants de deux supports d'enjoliveur de préférence de manière à pouvoir pivoter.

11. Enjoliveur selon l'une des revendications 1 à 10, **caractérisé en ce que** le ressort se compose de barres individuelles soumises au flambage (1") dont les extrémités sont montées mobiles dans des trous borgnes ou des logements correspondants de deux supports d'enjoliveur voisins.
